# FASCICULE DE BREVET EUROPEEN

(11) **EP 2 864 266 B1**
(45) Date de publication et mention de la délivrance du brevet: **11.12.2019**
(21) Numéro de dépôt: 13741806.7
(22) Date de dépôt: 18.06.2013
(51) Int. Cl.: C03C 17/02

(54) **ARTICLE VITROCERAMIQUE ET PROCEDE DE FABRICATION**
GLASKERAMIKARTIKEL UND HERSTELLUNGSVERFAHREN
GLASS-CERAMIC ARTICLE AND MANUFACTURING METHOD

(30) Priorité: 21.06.2012 FR 1255823
(43) Date de publication de la demande: 29.04.2015
(73) Titulaire: Eurokera S.N.C., 02400 Château-Thierry (FR)
(72) Inventeur: GUILLEMOT, François, F-75019 Paris (FR); CHEMIN, Nicolas, F-92220 Bagneux (FR); DIAZ, Nathalie, F-75011 Paris (FR); VILATO, Pablo, F-75014 Paris (FR)
(74) Mandataire: Saint-Gobain Recherche
(86) Numéro de dépôt international: PCT/FR2013/051419
(87) Numéro de publication internationale: WO 2013/190230

(56) Documents cités:
- WO-A1-01/74739
- WO-A1-2011/085997
- WO-A2-2010/131057
- US-A1- 2004 038 081

## Description

La présente invention concerne le domaine des vitrocéramiques. Plus précisément, elle concerne un article (ou produit) en vitrocéramique, notamment une plaque vitrocéramique, destiné(e) en particulier à couvrir ou recevoir des éléments de chauffage, ledit article présentant au moins une zone mise en forme, pour éviter en particulier l'apparition de traces de doigts, et concerne également un procédé avantageux permettant d'obtenir ledit article vitrocéramique mis en forme.

Les ventes d'articles tels que des plaques de cuisson en vitrocéramique sont en augmentation constante depuis plusieurs années. Ce succès s'explique notamment par l'aspect attractif de ces plaques et par leur facilité de nettoyage.

Rappelons qu'une vitrocéramique est à l'origine un verre, dit verre précurseur (ou verre-mère ou green-glass), dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité ; elle doit également présenter une transmission élevée dans les longueurs d'onde du domaine de l'infrarouge dans le cas notamment des plaques à foyers radiants.

Les principales plaques actuelles sont de couleur sombre, en particulier noires (telles que les vitrocéramiques KeraBlack commercialisées par la société EuroKera). D'autres plaques existent également telles que des plaques d'aspect plus clair (en particulier blanches, telles que les vitrocéramiques KeraWhite commercialisées par la société EuroKera), présentant par exemple un flou d'au moins 50 % (comme décrit dans le brevet FR2766816), ou des plaques plus transparentes (telles que les vitrocéramiques KeraVision ou KeraResin, commercialisées par la société EuroKera), présentant le cas échéant des revêtements de type émaux ou peintures.

Les plaques sont généralement destinées à être utilisées comme plaques de cuisson (ou encore comme pare-feu, etc.) et incluent le cas échéant une portion (ou bandeau de commande) munie de touches, zones tactiles, boutons ou autres commandes permettant le cas échéant l'activation des zones de chauffe ou le choix de paramètres tels que les temps de cuisson. L'utilisation de ces plaques et leur manipulation ou la manipulation de ces commandes occasionne généralement l'apparition de traces de doigts peu esthétiques aux endroits de contact, entrainant le cas échéant des nettoyages répétés, en particulier lorsque les plaques sont sombres et brillantes. WO 2010/131057 décrit le dépôt d'une couche évitant l'apparition de traces de doigts. La présente invention a donc cherché à mettre au point un article formé d'un substrat (en particulier une plaque) vitrocéramique ne présentant pas de tels inconvénients dans leur usage quotidien et leur manipulation.

Ce but a été atteint par l'article selon l'invention comprenant au moins un substrat vitrocéramique (en particulier une plaque, destinée par exemple à couvrir ou recevoir au moins un élément chauffant), ledit substrat présentant en au moins une zone une rugosité (ou structuration ou texturation) de surface telle que les dimensions caractéristiques des motifs formant ladite rugosité sont selon la revendication 1. Par dimensions caractéristiques, on entend la hauteur/profondeur (H) des motifs (ou plus grande dimension de chacun des motifs perpendiculairement à la (tangente à la) surface rugueuse à l'endroit du motif considéré) et les dimensions caractéristiques de chacun des motifs dans le plan de la surface rugueuse (en considérant la surface rugueuse mise à plat). Par dimensions caractéristiques de chacun des motifs dans le plan de la surface rugueuse, on entend celles de la projection (suivant la perpendiculaire à la (tangente à la) surface rugueuse) des motifs sur la surface rugueuse (ou celles de la plus grande section du motif dans un plan parallèle à celui de la surface rugueuse - dite plus grande section longitudinale), à savoir la plus grande dimension de cette projection ou section (ou longueur L), et la dimension de cette projection ou section dans une direction perpendiculaire à cette direction L (ou largeur I, cette largeur pouvant également être égale à la longueur L et correspondant au diamètre dans le cas d'une section circulaire). Plus précisément selon l'invention, la périphérie (ou les contours) de cette projection ou plus grande section de chacun des motifs s'inscrit (ou est contenue) entre deux cercles concentriques, l'un étant de 2 µm de diamètre et l'autre étant de 100 µm de diamètre.

La hauteur H est comprise entre 2 et 50 µm, et de façon particulièrement préférée est comprise entre 2 et 15 µm. La longueur L et la largeur | sont comprises chacune entre 2 et 100 µm.

L'espacement (e) entre chacun des motifs est en outre avantageusement inférieur ou égal à 50 µm, de préférence inférieur ou égal à 30 µm et en particulier inférieur ou égal à 20 µm, cet espacement étant d'autant plus réduit que les dimensions caractéristiques des motifs dans le plan de la surface rugueuse sont grandes.

La ou les zones pourvues de la rugosité ainsi définie peuvent être par exemple la ou des zones du bandeau de commande pour une plaque de cuisson.

La création d'une telle structuration de surface (ou structuration/porosité en surface ou à la surface du substrat) de dimensions particulières telles que définies permet de résoudre le problème de traces de façon efficace pour les vitrocéramiques (d'autres moyens, tels que le recours à un traitement oléophobe, s'étant notamment révélés insuffisants et peu pérennes pour des plaques sombres) sans changer la composition de la plaque ni ses propriétés en volume et sans risques de dégradation sous l'effet de la chaleur ni effets défavorables sur les autres propriétés recherchées de la plaque. On observe ainsi que le dépôt laissé par le contact des doigts (dépôt huileux ou sébum, d'épaisseur n'excédant pas généralement 500 nm, avec des sillons de largeur n'excédant pas une centaine de microns) n'obture pas complètement les motifs de la rugosité, n'entrainant pas l'apparition de traces. Les motifs sélectionnés n'altèrent pas en outre la transmission lumineuse du substrat ni son aspect général.

La rugosité ou structuration est généralement formée de plusieurs motifs, identiques ou éventuellement différents, en particulier d'une répétition de motif(s). Les motifs peuvent être en creux et/ou en relief (par rapport au plan ou à la surface du substrat), répartis régulièrement (répartition périodique, pseudo- ou quasi-périodique) ou aléatoirement (l'espacement entre des motifs consécutifs restant cependant inférieur ou égal à 50 µm), peuvent être alignés ou décalés, etc. Ces motifs généralement géométriques (ou sensiblement géométriques mais pouvant également être de toute forme quelconque ou complexe de périphérie s'inscrivant entre deux cercles comme évoqué précédemment) sont avantageusement tridimensionnels, et sont par exemple de section dite longitudinale (c'est-à-dire parallèle à la surface rugueuse ou à celle du substrat dans la zone rugueuse) circulaire, hexagonale, carrée, rectangulaire, ovale, trapézoïdale, allongée, etc, et/ou de section transversale (perpendiculairement à la (tangente à la) surface rugueuse ou à celle du substrat dans la zone rugueuse) rectangulaire, semi cylindrique, trapézoïdale, tronconique et/ou pyramidale et/ou triangulaire, etc. La rugosité peut notamment être formée d'un réseau (ou répétition) avantageusement périodique de motifs sous forme par exemple de plots de forme rectangulaire ou pyramidale.

Différentes zones du substrat peuvent être structurées avec des motifs similaires ou distincts. La rugosité est présente en au moins une zone d'au moins une face du substrat, en particulier sur la face destinée à être la face visible (généralement face supérieure) en position d'utilisation du substrat.

Les dimensions caractéristiques des motifs sont de l'ordre du micron (de préférence de 2 à quelques dizaines de microns ou quelques microns notamment) comme indiqué selon l'invention, les motifs présentant généralement une périodicité (ou un pas) entre 5 et 100 µm. Les motifs ou le réseau de motifs s'étend(ent) de préférence sur une surface au moins supérieure ou égale à 0,005 m² pour produire l'effet recherché (la surface de la zone de commande pouvant être pourvue de ces motifs étant par ailleurs généralement de l'ordre de 0.005-0.01 m²).

Dans un premier mode préféré de réalisation de l'invention, les motifs sont en particulier de section longitudinale et/ou transversale (sensiblement ou précisément) carrée ou rectangulaire, avec de préférence une hauteur et une longueur/largeur chacune comprises entre 2 et 15 µm, de préférence entre 2 et 10 µm environ, en particulier de l'ordre de 5 µm, et un espacement par exemple inférieur ou égal à 50 µm, notamment compris entre 1 et 50 µm, et en particulier inférieur à 30 µm.

Dans un second mode préféré de réalisation de l'invention, les motifs sont en particulier de section transversale (sensiblement ou précisément) triangulaire ou pyramidale, avec de préférence une hauteur inférieure à 20 µm (et supérieure à 2 µm), et un espacement inférieur à 30 µm, et une base (de la pyramide) de longueur/largeur comprise entre 20 et 100 µm.

De préférence, la structuration est présente (ou pratiquée), non pas dans le substrat vitrocéramique même, mais dans une couche portée (directement ou non) par le substrat vitrocéramique, ladite couche revêtant le substrat en au moins la zone devant être structurée et/ou sur une surface du substrat incluant ladite zone, voire sur la totalité de la ou des faces concernées (portant la structuration) du substrat.

Le substrat présente ainsi en au moins une zone d'au moins une face, au moins une couche (ou revêtement) présentant la rugosité/structuration précédemment définie.

Cette couche doit à la fois pouvoir être appliquée sur la vitrocéramique, être compatible avec les conditions d'utilisation de ladite vitrocéramique (dont la température), et être apte à être pourvue de la rugosité recherchée (elle doit être apte à être déformée avant texturation et rester figée après). La couche revêtant le substrat est avantageusement choisie transparente (avant texturation, cette couche conservant avantageusement sa transparence après texturation). Cette couche peut être dense ou également poreuse (avec des pores de plus faibles dimensions que les motifs). De façon avantageuse, cette couche ou revêtement est une couche (issue d'un procédé) sol-gel, mais il peut également s'agir d'une couche d'un polymère résistant aux conditions thermiques de la zone concernée (par exemple une couche de PMMA- polyméthacrylate de méthyle- si elle est située dans une zone autre qu'une zone de chauffe). De préférence, on utilise une couche sol-gel, cette couche étant obtenue par procédé sol-gel à partir de précurseurs inorganiques. Une telle couche est suffisamment souple pour s'adapter aux contours, le cas échéant irréguliers, de la vitrocéramique, permet une bonne adhésion avec la vitrocéramique, et est apte à repasser à l'état visqueux après dépôt sur la vitrocéramique, comme explicité ultérieurement, pour pouvoir être structurée, comme décrit dans le procédé selon l'invention, avant de se figer définitivement. Inorganique, cette couche sol-gel est également compatible le cas échéant avec le procédé de céramisation utilisé pour obtenir le substrat vitrocéramique.

De nombreux éléments chimiques peuvent être à la base de la couche sol-gel. Elle peut notamment comprendre (comme matériau constitutif essentiel) au moins un composé (oxyde(s) simple(s) ou mixte(s), alkoxyde(s), halogénure(s), ...) de l'un au moins des éléments suivants : Si, Ti, Zr, W, Sb, Hf, Ta, V, Mg, Al, Mn, Co, Ni, Sn, Zn, Ce. Généralement, cette couche est une couche de sol hydrolysé à base d'alkoxyde(s) et/ou d'halogénure(s) d'au moins un métal choisi parmi les éléments précités, avec un groupement organique non réactif ou non hydrolysable (par exemple un ou des groupes méthyles) permettant le cas échéant de conserver une certaine souplesse à la couche utile à son dépôt sur la surface de la vitrocéramique (afin de bien épouser les contours de ladite surface) et pouvant être éliminée après durcissement de la couche .

Les précurseurs de la couche sol-gel peuvent également comprendre d'autres composants tels que des colorants et/ou des tensioactifs (améliorant si besoin est la qualité de dépôt) et/ou des porogènes (du type latex de PMMA ou de polystyrène), etc, qui, pour certains, sont éventuellement destinés à être éliminés avant élaboration de la couche finale.

De préférence, la couche est essentiellement à base d'au moins l'un des composés suivants : Si (pour son adhésion et sa compatibilité avec la vitrocéramique), ou Ti, ou Zr. Le sol (ou solution, notamment dans l'eau ou l'alcool, des précurseurs de la couche sol-gel à obtenir) est par exemple un alkoxyde de silicium avec un groupement organique, linéaire, ramifié ou cyclique ou aromatique (tel qu'un méthyle, vinyle, phényle,...). En particulier on utilise du MTEOS (méthyl triéthoxysilane), organosilane possédant trois groupements hydrolysables et dont la partie organique est un méthyle, permettant aisément de réaliser des couches de quelques microns. La synthèse du sol basé sur ce composé est en outre extrêmement simple puisqu'elle se fait en une seule étape (mise en solution des précurseurs dans l'eau ou dans au moins un alcool notamment) et ne nécessite pas nécessairement de chauffage. De plus, le sol préparé est stable et peut être conservé plusieurs jours sans gélifier.

De préférence l'épaisseur de la couche est comprise entre 1 et 15 µm avant structuration, et est comprise entre 2 et 30 µm (on peut également parler de couche mince ou de film) après structuration (la matière se re-répartissant le cas échéant, en particulier dans le cas des couches sol-gel).

Outre la structuration, cette couche peut aussi présenter d'autres caractéristiques ou fonctionnalités, par exemple peut être avantageusement hydrophobe, oléophobe, ou hydrophile, etc.

L'article selon l'invention est en particulier une plaque de cuisson, mais peut aussi être tout autre article en vitrocéramique présentant par exemple un affichage fonctionnel ou décoratif, et destiné à subir des manipulations et/ou entretiens.

Par articles/substrats/plaques (en) vitrocéramiques, on entend non seulement les articles/substrats/plaques réalisés en vitrocéramique proprement dite mais on peut entendre également ceux ou celles en tout autre matériau analogue convenant pour les mêmes applications, en particulier résistant à haute température et/ou présentant un coefficient de dilatation nul ou quasi-nul (par exemple inférieur à 15.10⁻⁷ K⁻¹, comme pour les plaques vitrocéramiques utilisées avec des feux radiants). De préférence cependant, il s'agit d'un article/substrat/plaque en vitrocéramique proprement dite.

De préférence, l'article selon l'invention est formé d'une plaque (substrat) vitrocéramique majoritairement ou quasiment plane (en particulier avec une flèche inférieure à 0,1% de la diagonale de la plaque, et de préférence de l'ordre de zéro), et, comme indiqué précédemment, est destiné à servir de plaque de cuisson, par exemple intégrée dans une table de cuisson ou cuisinière, ladite table ou cuisinière comprenant en outre des éléments chauffants, tels que des foyers radiants ou halogènes ou des éléments de chauffage par induction.

La plaque présente généralement une face "supérieure" (face visible) en position d'utilisation, une autre face "inférieure" (souvent cachée, dans le châssis ou caisson d'une cuisinière par exemple) en position d'utilisation, et une tranche (ou chant ou épaisseur). La face supérieure est généralement plane et lisse mais peut aussi présenter (outre la rugosité en au moins une zone comme défini précédemment) au moins une (autre) zone en relief et/ou en creux et/ou au moins une ouverture (par exemple si la plaque incorpore une ouverture destinée à recevoir un brûleur à gaz atmosphérique), généralement fonctionnelle(s) (à des fins de signalisation ou pour des utilisations particulières de la plaque), les variations de surface, en dehors le cas échéant de ces zones et ouvertures et des zones texturées selon l'invention, restant généralement inférieures à quelques nm. La face inférieure est généralement lisse ou munie de picots (de l'ordre de 1 à quelques mm) augmentant sa résistance mécanique et obtenus traditionnellement par laminage. Dans le cas des picots, une résine d'indice peut être éventuellement appliquée sur la surface inférieure afin de la lisser.

L'article selon l'invention est avantageusement à base de toute vitrocéramique ayant, de manière intrinsèque, une transmission lumineuse allant de 0,8% à 40% et une transmission optique d'au moins 0,1% pour au moins une longueur d'onde, comprise dans le domaine du visible, au dessus de 420 nm (et jusqu'à 780 nm). Par « de manière intrinsèque», on entend que le substrat possède une telle transmission en lui-même, sans revêtement(s). La transmission lumineuse est mesurée selon la norme ISO 9050 :2003 en utilisant l'illuminant D65, et est la transmission totale (intégrée dans le domaine du visible), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4 mm selon la norme ISO 9050 :2003.

L'invention convient aux plaques vitrocéramiques sombres, claires ou colorées. Dans le cas d'une plaque de transmission lumineuse allant de 2,3% à 40% et de transmission optique d'au moins 0,6% pour au moins une longueur d'onde comprise dans le domaine allant de 420 à 480 nm, la vitrocéramique présente de préférence au moins un moyen de masquage destiné à masquer au moins une partie des éléments sous-jacents associés (moyens de chauffage notamment) sous forme le cas échéant d'un ou plusieurs revêtements supplémentaires (situés généralement sur la face inférieure de la plaque) en plus du revêtement structuré selon l'invention (situé généralement sur la face supérieure de la plaque aux fins d'éviter les traces de doigts) .

L'invention s'applique de façon particulièrement avantageuse aux plaques sombres (notamment telles que la valeur de L* dans le système colorimétrique CIE, calculée à partir du spectre de transmission de ladite vitrocéramique sur le domaine du visible, soit inférieure à 70%), présentant notamment une transmission lumineuse dans le visible de 0,8% à 5% et une transmission optique supérieure à 0,1% pour au moins une longueur d'onde dans le domaine du visible supérieure à 450 nm.

La vitrocéramique utilisée comprend par exemple les constituants suivants et/ou est obtenue par céramisation à partir d'un verre de composition suivante, dans les limites ci-après exprimées en pourcentages pondéraux : SiO₂: 52 - 75 %; Al₂O₃ :18 - 27 %; Li₂O: 2,5 - 5,5 %; K₂O : 0 - 3 %; Na₂O : 0 - 3 %; :ZnO : 0 - 3,5 %; MgO : 0 - 3 %; CaO: 0 - 2,5%; BaO : 0 - 3,5 %; SrO : 0 - 2 %; TiO₂ :1,2 - 5,5 %; ZrO₂ : 0 - 3 %; P₂O₅: 0 - 8 %. Elle peut aussi comprendre jusqu'à 1 % en poids de constituants non essentiels n'affectant pas la fusion du verre-mère ou la dévitrification ultérieure conduisant à la vitrocéramique, notamment des colorants tels que de l'oxyde de vanadium, etc.

L'article selon l'invention peut également comporter divers revêtements fonctionnels et/ou décoratifs, à base d'émail, de peinture, etc. Par exemple, l'une des faces du substrat peut comporter une couche d'émail de décoration, de masquage, ou d'autre fonction (homogénéisation de l'éclairage, etc.). La couche structurée selon l'invention peut recouvrir le cas échéant au moins en partie un ou plusieurs des autres revêtements présents (de masquage, fonctionnels et/ou décoratifs) et/ou l'un et/ou l'autre desdits revêtements peuvent se trouver le cas échéant en face opposée (en particulier inférieure) du substrat.

De même, l'article selon l'invention peut comporter d'autres éléments et/ou couches que les constituants précités. Par exemple, lorsqu'il s'agit d'un module de cuisson, l'article peut être muni de (ou associée avec des) élément(s) fonctionnel(s) ou de décor supplémentaire(s) (cadre, connecteur(s), câble(s), élément(s) de commande), etc. Il peut aussi comprendre une ou des sources lumineuses, un ou des guides d'onde, un ou des moyens d'extraction du rayonnement émis par la ou les sources (couches rapportées ou traitement(s) diffusants obtenus par exemple par gravure laser, impression d'émail, attaqué chimique (acide..) ou mécanique (sablage...), etc), un ou des dispositifs d'affichage (l'affichage étant vu au travers du substrat), etc. L'article comprend aussi généralement des moyens de commande et/ou de contrôle des éléments de chauffages associés.

L'invention concerne également les appareils (ou dispositifs) de cuisson et/ou de maintien à haute température comportant au moins (ou consistant en) un article selon l'invention (par exemple cuisinières, tables de cuisson encastrables, fours, etc) et comportant, le cas échéant, un ou plusieurs éléments chauffants tels qu'un ou plusieurs éléments radiants ou halogènes et/ou un ou plusieurs brûleurs à gaz atmosphérique et/ou un ou plusieurs moyens de chauffage par induction. L'invention englobe aussi bien des appareils de cuisson comportant une seule plaque que des appareils comportant plusieurs plaques, chacune de ces plaques étant le cas échéant à feu unique ou à feux multiples. Par le terme « feu », on entend un emplacement de cuisson. L'invention concerne également des appareils de cuisson mixtes dont la ou les plaques de cuisson comportent plusieurs types de feux (feux à gaz, feux radiants, halogènes ou à induction). En outre, l'invention n'est pas limitée à la fabrication de plaques ou modules de cuisson pour cuisinières ou tables de cuisson. Les articles fabriqués conformément à l'invention peuvent également être d'autres modules plans ou plaques devant présenter une grande insensibilité aux variations de température.

La présente invention concerne également un procédé d'obtention de l'article tel que défini. La présente invention a en effet mis au point un procédé de fabrication de l'article selon l'invention selon lequel on obtient la rugosité recherchée (entre 2 et 100 µm pour les dimensions caractéristiques dans le plan de la surface rugueuse et 2 et 50 µm pour la hauteur H) sur le substrat, plus précisément sur la couche à structurer déposée en surface du substrat, par duplication (ou réplication ou transfert) d'une rugosité cible (ou motifs de dimensions caractéristiques choisies) à l'aide d'un tampon ou masque moulé aux contours de ladite rugosité cible. Le procédé selon l'invention permet le transfert, efficace d'un motif aux dimensions recherchées (2 µm à 100 µm pour les dimensions caractéristiques dans le plan de la surface rugueuse et entre 2 et 50 µm pour la hauteur H) à la couche à structurer appliquée sur le substrat vitrocéramique et peut même être généralisé au transfert de rugosités présentant d'autres dimensions fonctionnelles ou esthétiques, comme précisé ultérieurement.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante. Le cas échéant, le procédé comprend également une opération de découpe (généralement avant céramisation), par exemple par jet d'eau, traçage mécanique à la molette, etc. suivie par une opération de façonnage (meulage, biseautage,...).

Dans le procédé selon l'invention, on dépose une couche apte à être déformée (ou structurable) sur le substrat vitrocéramique (après, ou éventuellement avant selon le type de couche, céramisation du verre précurseur - ou verre-mère ou green glass- permettant d'obtenir ledit substrat), puis on applique sur la couche apte à être déformée la face structurée d'un tampon ou masque, préalablement moulé aux contours de la rugosité recherchée (ou rugosité cible), comme explicité par la suite, et on transfère (ou duplique) ladite rugosité, en particulier à chaud et sous pression, sur ladite couche structurable (ou déformable).

La formation du masque aux contours choisis puis la duplication sur la couche apte à être déformée rendent possible l'obtention de la rugosité recherchée sur le substrat selon l'invention. Cette rugosité, de profondeur de l'ordre du micron, ne peut en effet pas être obtenue par d'autres procédés de mise en forme utilisés pour des reliefs de dimensions plus importantes dans le domaine des vitrocéramiques tel que le laminage. D'autres procédés permettant d'obtenir des reliefs de quelques millimètres, tels que la gravure laser ou l'attaque chimique, ne sont pas non plus adaptés pour obtenir le produit selon l'invention, de même que des procédés d'autres domaines tels que les techniques lithographiques (utilisées en électronique) ne sont pas adaptés aux vitrocéramiques et à la fabrication de produits de masse en raison de leur coût élevé, leur lenteur, leur complexité (plusieurs étapes), etc.

Comme indiqué précédemment, la couche apte à être déformée est avantageusement une couche sol-gel, apte à repasser à l'état visqueux/déformable sous une certaine température (au dessus de la température de transition vitreuse) et ainsi à être structurée comme recherché selon l'invention. Comme évoqué précédemment, cette couche est par exemple une couche de sol hydrolysé à base d'alkoxyde(s) et/ou d'halogénure(s) d'au moins un métal choisi parmi Si, Ti, Zr, W, Sb, Hf, Ta, V, Mg, Al, Mn, Co, Ni, Sn, Zn, Ce avec un groupement organique non réactif, lequel permet le cas échéant de garder une certaine souplesse.

Le dépôt de cette couche sur le substrat peut se faire de différentes façons, en particulier par voie liquide (notamment par dépôt du sol) telle que le dépôt par centrifugation du sol (spin coating ou passage à la tournette), le dépôt par trempage dans le sol (dip coating), ou la pulvérisation du sol (spray coating) puis le cas échéant l'étalement des gouttes par raclage, brossage, chauffage, etc., ou encore peut se faire par enduction laminaire (dépôt du sol à l'aide d'une ouverture se déplaçant au dessus du substrat). Le dépôt peut être suivi le cas échéant d'une étape de séchage du sol (en particulier à moins de 100 °C) pour évaporer le solvant et fixer la couche, sans pour autant enlever son aptitude à subir une structuration ultérieure. Il est important de contrôler les conditions d'élaboration de la solution sol-gel de manière à ce que la couche reste déformable au cours du procédé (par exemple il faut éviter tout chauffage pouvant faire polymériser la couche de façon irréversible). Le dépôt peut se faire sur une partie du substrat (par exemple sur le bandeau de commande) ou sur l'ensemble d'une face notamment.

Conformément à la présente invention, la rugosité cible est avantageusement obtenue à partir d'une rugosité préexistante présente sur une autre surface ou sur un autre produit.

On utilise avantageusement un masque (ou tampon) à base d'un matériau à la fois solide et souple tel qu'un matériau polymérique, notamment de type élastomère, par exemple du PDMS (polydiméthysiloxane) ou du VDMS (vinyldiméthysiloxane), ou de l'EVA (acétate de vinyle éthylène) ou de l'époxy ou un copolymère), ce matériau étant éventuellement traité en surface (par exemple avec une couche de silane fluoré et/ou du TMCS (trichlorométhylsiloxane) pour développer une surface anti-adhérente (cette couche anti-adhésive n'excédant pas quelques nanomètres d'épaisseur et ne modifiant donc pas les motifs en comblant les cavités du masque, cette couche permettant notamment d'utiliser le masque plusieurs fois), l'utilisation d'un masque souple présentant l'avantage de respecter la surface du substrat, de minimiser la pression requise pour établir un contact avec la couche à structurer, et de pouvoir se conformer lors de sa réalisation à la rugosité cible recherchée. Un tel masque (notamment en PDMS) présente également l'avantage d'augmenter les cinétiques de condensation sol-gel avec une meilleure évaporation de solvant possible par rapport à des moules durs (par exemple en silicium et en nickel).

Le masque est par exemple obtenu en appliquant ou en coulant le matériau polymère ou ses précurseurs sur une surface solide présentant la rugosité cible puis en fixant le masque, le cas échéant par refroidissement, chauffage (par exemple jusqu'à 80 °C) et/ou réticulation, afin d'obtenir le masque de profil figé recherché. Notamment, le polymère liquide peut être porté au-dessus de son point de fusion ou de sa température de transition vitreuse puis refroidi, ou le masque en polymère peut être obtenu en mélangeant et coulant deux monomères réagissant ensemble (puis figeant) à température ambiante ou par chauffage, ou un film polymère peut être appliqué sur la surface cible puis chauffé au-dessus de son point de fusion ou de sa température de transition vitreuse et mis sous pression, puis figé par refroidissement, etc .

La surface de rugosité cible utilisée peut être toute surface d'objet préexistant ou peut être une surface créée par exemple par sablage sur un rouleau et imprimée par laminage sur un film plastique avant (ajout sur le tampon élastomère). Le procédé est notamment compatible avec l'utilisation de masques bas coûts formés par des feuilles polymères texturées produites par roll-to-roll. Il est ainsi possible de dupliquer toute surface rugueuse de dimensions recherchées pour l'article selon l'invention sans avoir à élaborer de moule métallique ou composite ou autre dispositif couteux à cet effet. La méthode selon l'invention peut également être utilisée avec avantages pour fonctionnaliser et/ou conférer un aspect esthétique particulier à la vitrocéramique en dupliquant des surfaces appropriées pour conférer la fonction ou l'esthétisme recherchés de façon simple et sans investir dans des appareillages coûteux. Le procédé selon l'invention permet donc d'obtenir le produit recherché selon l'invention mais également par extension d'autres produits vitrocéramiques présentant une rugosité fonctionnelle et/ou esthétique différente, en particulier une rugosité inférieure à 100 µm (c'est-à-dire de dimensions caractéristiques inférieures à 100 µm).

Le motif créé sur le masque est généralement le négatif du motif à dupliquer ou d'une partie du motif à dupliquer. Le motif final peut le cas échéant être formé avec plusieurs masques (identiques ou différents) ou par plusieurs passages. On peut aussi utiliser plusieurs sous-masques de petites tailles pour former un masque de grande taille, ce qui facilite sa fabrication et donne plus de souplesse (changement d'un des masques si nécessaire en cas d'usure, de défauts...). La surface de la couche déposée sur la vitrocéramique peut aussi être plusieurs fois structurée, de préférence en continu, à l'aide de masques qui peuvent être similaires ou distincts. Le masque peut également présenter plusieurs zones avec des motifs distincts par leur taille, leur distance, etc. Comme déjà indiqué précédemment, les motifs obtenus peuvent ne pas présenter des formes géométriques parfaites. Dans le cas de motifs à angles vifs, le motif peut également le cas échéant s'arrondir sans nuire aux performances requises.

Le masque est par exemple utilisé plan pour structurer la couche (il est alors associé le cas échéant avec une presse plane) ou peut aussi être utilisé courbe et/ou associé avec un moyen rotatif (tel qu'un cylindre, etc).

La structuration de (ou duplication des motifs sur) la couche structurable déposée sur la vitrocéramique est réalisée par application du masque par déformation viscoélastique par contact avec le masque structuré à chaud et en exerçant une pression, et éventuellement par remplissage capillaire du masque flexible structuré. La structuration est réalisée dans une gamme de températures adaptée pour un seuil de condensation suffisant assurant la tenue thermique de la structuration, avec une durée de structuration associée (généralement inférieure ou égale à 2 heures, de préférence inférieure ou égale à 1 heure, encore plus préférentiellement à 30 minutes) généralement d'autant plus faible que la structuration est réalisée à des températures élevées.

La structuration débute à partir du moment où le masque s'enfonce dans la couche, et se termine au retrait du masque, soit appliqué et retiré à chaud, soit après descente en température du masque resté sur la couche.

Le chauffage lors de la structuration (chauffage extérieur et/ou chauffage du tampon même) peut être réalisé par une lampe infrarouge ou halogène ou par un fluide chauffé ou une résistance, etc. Ce chauffage (thermique, radiatif...) peut être maintenu pendant une partie de la phase de contact ou peut être coupé voire même inversé (refroidissement) afin de rigidifier le produit. Pour limiter les coûts en énergie et/ou une déformation du tampon ou masque en polymère on peut préférer une température de structuration inférieure ou égale à 200°C, voire à 180°C. Par exemple, la structuration peut-être réalisée à une température entre 100°C et 130°C pendant 10 min à 30 min, ou à une température un peu plus élevée (notamment entre 150°C et 180°C) pendant une durée plus faible (par exemple inférieure ou égale à 10 minutes). Parallèlement, le tampon est généralement lui-même chauffé après la mise en contact avec la couche pour favoriser l'impression).

Lors de la structuration, on applique également généralement une pression, par exemple inférieure à 5 bars, de préférence inférieure à 2 bars. On peut notamment et avantageusement utiliser un fluide sous pression pour comprimer le masque ou tampon contre le substrat, ceci permettant de s'affranchir des limitations observées avec l'utilisation d'une presse mécanique (tels que les défauts de planéité pouvant conduire à une variation de pression entrainant une variation de la profondeur des motifs transférés). Ce fluide sous pression peut être appliqué en utilisant une enceinte sous pression, une membrane flexible retranscrivant la pression du fluide, ou encore des courants de fluides pressurisés par l'intermédiaire d'ouvertures disposées le long de la surface de contact, etc.

On peut par exemple introduire dans une enveloppe en matériau non perméable le substrat revêtu de la couche et le masque, placer l'ensemble dans une enceinte hermétique, évacuer l'air de l'enceinte (par exemple jusqu'à une pression au plus égale à 5 mbar), sceller l'enveloppe avant réintroduction de l'air dans l'enceinte, introduire l'enveloppe scellée et son contenu dans un autoclave, appliquer une pression (par exemple entre 0.5 et 8 bar) à chaud (par exemple entre 25 et 200 °C pendant 15 minutes à plusieurs heures) puis ouvrir l'enveloppe et séparer le substrat structuré obtenu et le masque, le scellage et l'évacuation de l'air étant nécessaire pour permettre la transmission de la pression du fluide au tampon. Le cas échéant, la face texturée du masque est perméable à l'air, évitant ainsi lors du scellage le piégeage de bulles d'air entre le substrat revêtu et le masque. L'autoclavage peut également être remplacé le cas échéant par un simple étuvage.

Les paramètres (température, pression) peuvent être ajustés en fonction de la nature de la couche déformable, l'objectif étant de venir presser le masque contre la couche apte à être déformée tout en la réticulant pour la rendre indéformable. De cette façon, on imprime et on fige le motif inscrit en surface du tampon dans la couche déposée en surface du substrat. La température dans l'autoclave peut le cas échéant être successivement portée à une température supérieure, puis inférieure à la température de transition vitreuse du matériau polymère du masque, ou inversement, afin de contrôler précisément le comportement mécanique du masque et d'optimiser le contact entre le masque et le substrat revêtu.

La structuration est avantageusement réalisée rapidement après le dépôt de la couche (quelques minutes à quelques dizaines de minutes) et peut être faite en ligne après le dépôt. Ce dépôt peut avoir été fait avant ou après céramisation et est préférentiellement fait après céramisation.

La structuration peut être suivie d'une étape de traitement thermique ou de traitement par ultraviolets (dans le cas notamment où la couche contient des groupements polymérisables sous rayonnement ultra-violet) pour densifier la couche structurée et figer (fixer) ladite couche, et le cas échéant pour éliminer le(s) groupement(s) organique(s), par exemple à une température supérieure à 400°C. La couche peut également être soumise à un nouveau traitement thermique pour la cristalliser, améliorer ses propriétés mécaniques, jouer sur la nature hydrophile/hydrophobe de sa surface, etc.

On obtient ainsi une couche (en particulier inorganique) structurée (par exemple une couche de silice), sans fissure et avec une bonne conservation des dimensions initiales de la cible ainsi qu'une bonne tenue mécanique. Le procédé permet d'atteindre des grandeurs caractéristiques de motifs de l'ordre du micron avec une tolérance sur les défauts de texturation ne nuisant pas aux performances recherchées. Il permet d'obtenir un produit structuré qui soit pérenne et rapide à fabriquer, avec une texturation parfaitement régulière en profondeur sur une surface plus ou moins grande selon les besoins.

Après la structuration, le produit peut aussi subir diverses transformations verrières dont le façonnage, comme évoqué précédemment. Le procédé convient pour la fabrication de produits à grand volume et/ou à grande échelle. Il peut être aisément automatisé et associé à d'autres transformations du produit. Il ne nécessite pas d'appareillage spécifique et est compatible avec les dispositifs couramment utilisés dans l'industrie vitrocéramique. Dans la mesure où le masque n'est pas détruit au cours du procédé, il peut être réutilisé plusieurs fois.

Le procédé permet d'élargir la gamme des produits vitrocéramiques disponibles, et permet le cas échéant d'appliquer des motifs présentant d'autres fonctionnalités que l'effet anti-traces de doigts recherché et/ou conférant le cas échéant un aspect esthétique particulier à la surface de la vitrocéramique, la fonction et les propriétés associées à la structuration dépendant en particulier des dimensions caractéristiques telles que la hauteur et la largeur du motif et/ou la distance entre motif ou le pas.

Les articles, en particulier plaques, selon l'invention peuvent notamment être utilisés avec avantage pour réaliser une nouvelle gamme de plaques de cuisson pour cuisinières ou tables de cuisson, et peuvent également être utilisés avec avantages pour réaliser des éléments de paroi ou des parois (par exemple des portes ou partie de portes) de fours, etc.

D'autres détails et caractéristiques avantageuses ressortiront ci-après de la description d'un mode de réalisation non limitatif de l'invention en référence aux dessins annexés représentant schématiquement en vue de coté les étapes du procédé selon l'invention.

Dans ce mode de réalisation d'un l'article selon l'invention, l'article 1 en question est un module de cuisson plan comprenant une plaque vitrocéramique (substrat) 2, cette plaque présentant par exemple une face supérieure lisse et une face inférieure lisse (cette face pouvant également être munie de picots) et une épaisseur de 4 mm, et une zone d'affichage 3 pour laquelle l'effet anti-traces de doigts est recherché,
Dans une première étape on réalise un masque souple 4 en PDMS (Poly-diméthylsiloxane) présentant le profil recherché.

Ce masque est obtenu (étape a) dans le présent exemple par coulage de PDMS liquide 5 sur la surface rugueuse (rugosité cible) 6 d'un verre de la marque Satinovo commercialisé par la société Saint- Gobain Glass France. Après solidification à 80°C pendant deux heures et séparation, le masque PDMS est traité par déposition chimique en phase vapeur de TMCS (Trichlorométhylsiloxane) pour développer une surface anti-adhérente (on obtient ainsi un masque prêt à l'emploi, dans l'étape b, présentant le négatif de la rugosité cible recherchée).

Parallèlement on réalise une couche mince (ou film) sol-gel 7 à partir d'un sol MTEOS (Méthyltriéthoxysilane) hydrolysé en milieu acide. Le sol est préparé par exemple à partir d'un mélange méthyltriéthoxysilane / acide acétique suivant un rapport massique 45/55. La solution est ensuite laissée sous agitation à température ambiante pendant 12h. Après hydrolyse totale des groupes éthoxy, le film, d'une épaisseur comprise entre 1 et 5 µm, est enduit par centrifugation sur le substrat vitrocéramique.

Le masque PDMS est ensuite appliqué sur la couche sol-gel (étape c), par exemple à basse pression (inférieure à 1,5 bar), les cavités se remplissant par capillarité, chauffage et pression (étape d). La faible viscosité du MTEOS favorise le remplissage des cavités du masque et réduit également les contraintes du recuit consécutif. Le masque est avantageusement chauffé après mise en contact avec la couche sol-gel, à une température de 110°C pendant une durée de 30 min (la durée de la montée jusqu'à ladite température variant entre 3 min et 7 min, la structuration étant d'autant plus rapide que cette montée est rapide).

Après redescente progressive à la température ambiante, on sépare le masque et le produit structuré (étape e). Le masque peut aussi être retiré à chaud, par exemple à 80°C.

La rugosité réalisée 8 présente les dimensions caractéristiques suivantes (mesurées, par exemple, par profilomètre optique, tel que celui commercialisé sous la référence New View par la société Zygo, ou bien par profilomètre mécanique ou par contact, etc.) : il s'agit d'un réseau de plots de forme approximativement pyramidale, de hauteur H maximale de 10-13 µm et de largeur l/longueur L entre 30 et 50 µm, l'espacement (e) entre les plots étant nul (ou proche de zéro) dans ce mode de réalisation.

Les motifs sont imprimés avec une bonne homogénéité sur plusieurs centimètres carrés (environ 20 cm par 20 cm) et corroborent les tailles initiales de la rugosité cible (celle du Verre Satinovo de départ) transférée par le masque.

Le traitement thermique de la couche MTEOS structurée se déroule dans un four pour densifier le réseau et obtenir l'oxydation et la décomposition totales des groupes méthyle (CH₃). La conservation des motifs dépend du niveau de condensation du film après structuration. Avec un niveau de condensation suffisant, le revêtement est suffisamment réticulé pour rester « solide » pendant la phase de chauffage (alors qu'il peut se refluidifier sous l'effet de la température si le taux de condensation est trop faible). Ce taux de condensation augmentant avec la température, plus la température est élevée, plus le temps nécessaire pour atteindre le seuil de condensation est faible. Dans le présent exemple, le traitement thermique est opéré à 500°C environ pendant deux heures. Les caractéristiques de structure sont conservées après traitement thermique et on obtient un revêtement structuré de pure silice. Les motifs sont stables dans le temps et ne sont pas dégradés par des solvants classiques.

Avant la structuration, une ou plusieurs autres étapes peuvent avoir été prévues, de préférence en continu, telles que le dépôt de couche(s) sous-jacentes, et, encore plus en amont, la formation du substrat vitrocéramique. On peut également réaliser une seconde structuration et/ou d'autres étapes postérieures à la structuration.

La présente invention convient en particulier à la réalisation de plaques vitrocéramiques de cuisson présentant des propriétés anti traces de doigts.

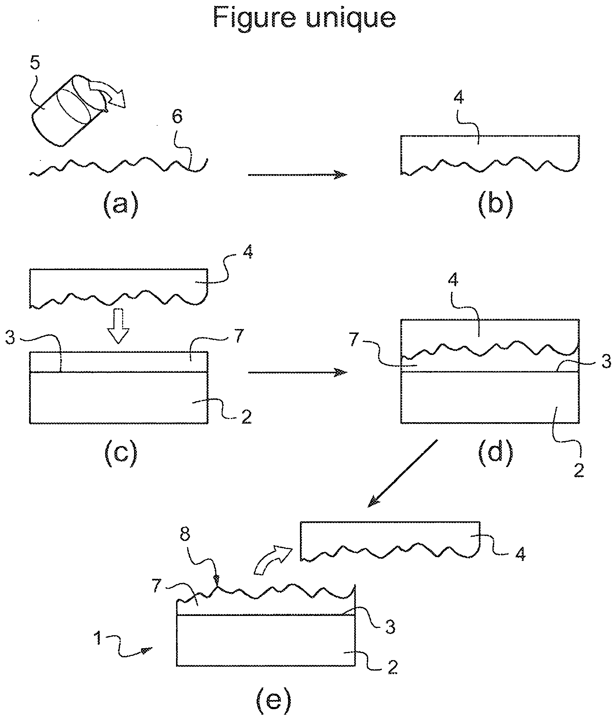

## Revendications

1. Article comprenant au moins un substrat vitrocéramique, en particulier une plaque, destinée par exemple à couvrir ou recevoir au moins un élément chauffant, **caractérisé en ce que** ledit substrat présente en au moins une zone une rugosité de surface telle que les dimensions caractéristiques des motifs formant ladite rugosité dans le plan de la surface rugueuse sont comprises entre 2 et 100 µm, la hauteur H des motifs étant comprise entre 2 et 50 µm.

2. Article selon la revendication 1, **caractérisé en ce que** la rugosité est formée d'un réseau de motifs, en particulier géométriques, la périphérie de la plus grande section longitudinale de chacun des motifs s'inscrivant entre deux cercles concentriques, l'un étant de 2 µm de diamètre et l'autre étant de 100 µm de diamètre.

3. Article selon l'une des revendications 1 à 2, **caractérisé en ce que** l'espacement (e) entre chacun des motifs est inférieur ou égal à 50 µm.

4. Article selon l'une des revendications 1 à 3, **caractérisé en ce que** les motifs sont de section longitudinale et/ou transversale carrée ou rectangulaire, avec une hauteur, une longueur et une largeur chacune comprises entre 2 et 15 µm, de préférence entre 2 et 10 µm, et un espacement inférieur ou égal à 50 µm, notamment compris entre 1 et 50 µm, en particulier inférieur à 30 µm, et/ou les motifs sont de section transversale triangulaire ou pyramidale, avec une hauteur inférieure à 20 µm et un espacement inférieur à 30 µm.

5. Article l'une des revendications 1 à 4, **caractérisé en ce que** le substrat présente en au moins une zone d'au moins une face, au moins une couche présentant ladite rugosité.

6. Article selon l'une des revendications 1 à 5, **caractérisé en ce que** ladite couche est une couche sol-gel.

7. Article selon l'une des revendications 1 à 6, ou dispositif de cuisson et/ou de maintien à haute température comportant un article selon l'une des revendications 1 à 6, et comportant un ou plusieurs éléments de chauffage.

8. Procédé de fabrication d'un article selon l'une des revendications 1 à 7, selon lequel on duplique une rugosité cible à l'aide d'un tampon ou masque moulé aux contours de ladite rugosité cible sur une couche déposée sur ledit substrat.

9. Procédé selon la revendication 8, **caractérisé en ce que** l'on dépose une couche apte à être déformée sur le substrat vitrocéramique, puis on applique sur ladite couche la face structurée d'un tampon ou masque, préalablement moulé aux contours de la rugosité cible, et on transfère ladite rugosité, en particulier à chaud et sous pression, sur ladite couche apte à être déformée.

10. Procédé selon l'une des revendications 8 ou 9, **caractérisé en ce que** la couche apte à être déformée est une couche sol-gel et le matériau de la face texturée du masque est un polymère de type élastomère.

11. Procédé selon l'une des revendications 8 à 10 **caractérisé en ce que** le masque est obtenu en appliquant ou en coulant le matériau polymère ou ses précurseurs sur une surface présentant la rugosité cible puis en fixant le masque le cas échéant par refroidissement, chauffage, et/ou réticulation, afin d'obtenir le masque en élastomère de profil figé recherché.

12. Procédé selon l'une des revendications 8 à 11 **caractérisé en ce qu'**il comprend une étape ultérieure de traitement thermique pour densifier et/ou fixer la couche structurée et le cas échéant pour éliminer le(s) groupement(s) organique(s).

## Patentansprüche

1. Artikel, umfassend mindestens ein Glaskeramiksubstrat, insbesondere eine Platte, die beispielsweise dazu bestimmt ist, mindestens ein Heizelement abzudecken oder aufzunehmen, **dadurch gekennzeichnet, dass** das Substrat in mindestens einer Zone eine derartige Oberflächenrauheit aufweist, dass die charakteristischen Abmessungen der Muster, welche die Rauheit in der Ebene der rauen Oberfläche bilden, zwischen 2 und 100 µm liegen, wobei die Höhe H der Muster zwischen 2 und 50 µm liegt.

2. Artikel nach Anspruch 1, **dadurch gekennzeichnet, dass** die Rauheit aus einem Gitter aus, insbesondere geometrischen, Mustern gebildet ist, wobei der Umfang des größten Längsschnitts jedes der Muster zwischen zwei konzentrischen Kreisen beschrieben ist, von denen einer einen Durchmesser von 2 µm und der andere einen Durchmesser von 100 µm hat.

3. Artikel nach einem der Ansprüche 1 bis 2, **dadurch gekennzeichnet, dass** der Abstand (e) zwischen jedem der Muster kleiner als oder gleich 50 µm ist.

4. Artikel nach einem der Ansprüche 1 bis 3, **dadurch gekennzeichnet, dass** die Muster einen quadratischen oder rechteckigen Längs- und/oder Querschnitt mit einer Höhe, einer Länge und einer Breite zwischen jeweils 2 und 15 µm, bevorzugt zwischen 2 und 10 µm, und einem Abstand von weniger als oder gleich 50 µm, insbesondere zwischen 1 und 50 µm, im Besonderen weniger als 30 µm aufweisen, und/oder die Muster einen dreieckigen oder pyramidalen Querschnitt mit einer Höhe von weniger als 20 µm und einem Abstand von weniger als 30 µm aufweisen.

5. Artikel nach einem der Ansprüche 1 bis 4, **dadurch gekennzeichnet, dass** das Substrat in mindestens einer Zone mindestens einer Seite mindestens eine Schicht aufweist, welche die genannte Rauheit aufweist.

6. Artikel nach einem der Ansprüche 1 bis 5, **dadurch gekennzeichnet, dass** die Schicht eine Sol-Gel-Schicht ist.

7. Artikel nach einem der Ansprüche 1 bis 6 oder Koch- und/oder Warmhaltevorrichtung mit einem Artikel einem der Ansprüche 1 bis 6 und mit einem oder mehreren Heizelementen.

8. Verfahren zur Herstellung eines Artikels nach einem der Ansprüche 1 bis 7, wonach man eine Zielrauheit mithilfe eines Stempels oder einer Maske, die mit den Konturen der Zielrauheit geformt ist, auf eine auf das Substrat aufgebrachte Schicht dupliziert.

9. Verfahren nach Anspruch 8, **dadurch gekennzeichnet, dass** man eine Schicht, die geeignet ist, verformt zu werden, auf das Glaskeramiksubstrat aufbringt, man dann auf diese Schicht die strukturierte Seite eines Stempels oder einer Maske, der bzw. die zuvor mit den Konturen der Zielrauheit geformt wurde, appliziert und man die Rauheit, insbesondere bei Wärme und unter Druck, auf die Schicht, die geeignet ist, verformt zu werden, überträgt.

10. Verfahren nach einem der Ansprüche 8 oder 9, **dadurch gekennzeichnet, dass** die Schicht, die geeignet ist, verformt zu werden, eine Sol-Gel-Schicht ist und das Material der texturierten Seite der Maske ein Polymer vom Elastomertyp ist.

11. Verfahren nach einem der Ansprüche 8 bis 10, **dadurch gekennzeichnet, dass** die Maske erhalten wird, indem das Polymermaterial oder seine Vorstufen auf eine Fläche, welche die Zielrauheit aufweist, appliziert oder gegossen wird und dann die Maske gegebenenfalls durch Kühlen, Erwärmen und/oder Vernetzen fixiert wird, um die Maske aus Elastomer mit dem angestrebten erstarrten Profil zu erhalten.

12. Verfahren nach einem der Ansprüche 8 bis 11, **dadurch gekennzeichnet, dass** es einen weiteren Wärmebehandlungsschritt umfasst, um die strukturierte Schicht zu verdichten und/oder zu fixieren und um gegebenenfalls die organische(n) Gruppe(n) zu eliminieren.

## Claims

1. An article comprising at least one glass-ceramic substrate, in particular a plate, intended, for example, to cover or receive at least one heating element, **characterized in that** said substrate exhibiting, in at least one region, a surface roughness such that the characteristic dimensions of the designs forming said roughness in the plane of the rough surface are between 2 and 100 µm, and the height H of the designs is between 2 and 50 µm.

2. The article as claimed in claim 1, **characterized in that** the roughness is formed of a network of designs, in particular geometrical designs, the periphery of the greater longitudinal section of each of the designs falling between two concentric circles, one having a diameter of 2µm and the other having a diameter of 100µm.

3. The article as claimed in either of claims 1 and 2, **characterized in that** the spacing (s) between each of the designs is less than or equal to 50 µm.

4. The article as claimed in one of claims 1 to 3, **characterized in that** the designs have a square or rectangular longitudinal and/or transverse section, with a height, a length and a width each of between 2 and 15 µm, preferably between 2 and 10 µm, and a spacing of less than or equal to 50 µm, in particular of between 1 and 50 µm, especially of less than 30 µm, and/or the designs have a triangular or pyramidal transverse section, with a height of less than 20 µm and a spacing of less than 30 µm.

5. The article as claimed in one of claims 1 to 4, **characterized in that** the substrate exhibits, in at least one region of at least one face, at least one layer exhibiting said roughness.

6. The article as claimed in one of claims 1 to 5, **characterized in that** said layer is a sol-gel layer.

7. The article as claimed in one of claims 1 to 6, or device for cooking and/or maintaining at high temperature comprising an article as claimed in one of claims 1 to 6, and comprising one or more heating elements.

8. A process for manufacturing of an article comprising at least one glass-ceramic substrate, in particular an article as claimed in one of claims 1 to 7, according to which a target roughness is duplicated using a pad or mask molded to the outlines of said target roughness on a layer deposited on said substrate.

9. The process as claimed in claim 8, **characterized in that** a layer capable of being deformed is deposited on the glass-ceramic substrate, then the structured face of a pad or mask, molded beforehand to the outlines of the target roughness, is applied to said layer, and said roughness is transferred, in particular under hot conditions and under pressure, onto said layer capable of being deformed.

10. The process as claimed in either of claims 8 and 9, **characterized in that** the layer capable of being deformed is a sol-gel layer and the material of the textured face of the mask is a polymer of elastomer type.

11. The process as claimed in one of claims 8 to 10, **characterized in that** the mask is obtained by applying the polymer material or its precursors to or by pouring the polymer material or its precursors over a surface exhibiting the target roughness and by then fixing the mask, if appropriate by cooling, heating and/or crosslinking, in order to obtain the mask made of elastomer having the desired set profile.

12. The process as claimed in one of claims 8 to 11, **characterized in that** it comprises a subsequent stage of heat treatment in order to densify and/or fix the structured layer and, if appropriate, in order to remove the organic group(s).
